# EUROPEAN PATENT APPLICATION

(11) **EP 4 753 365 A1**
(43) Date of publication of application: **03.06.2026**
(21) Application number: 23946219.5
(22) Date of filing: 26.07.2023
(51) Int. Cl.: H04W 76/19

(54) **RADIO LINK RECOVERY METHOD AND TERMINAL DEVICES**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); LIN, Xue, Dongguan, Guangdong 523860 (CN); YOU, Xin, Dongguan, Guangdong 523860 (CN)
(74) Representative: Taor, Simon Edward William
(86) International application number: PCT/CN2023/109374
(87) International publication number: WO 2025/020132

(57) **Abstract**

The present application provides a radio link recovery method and terminal devices. The method comprises: a terminal device acquires a first parameter of a serving cell and/or an LTM candidate cell, the first parameter being used for representing the channel quality of the serving cell and/or the LTM candidate cell; and, on the basis of the first parameter of the serving cell and/or the LTM candidate cell, the terminal device determines whether to perform a radio link recovery operation. On the basis of the first parameter of the LTM candidate cell and/or the serving cell, the embodiments of the present application can predetermine the condition of channel deterioration, so as to perform the radio link recovery operation earlier, thus helping to shorten the time during which the terminal device is located in scenarios having poor channel connections, and facilitating rapid recovery of radio links.

## Description

### TECHNICAL FIELD

The present disclosure relates to the field of communication technologies, and relates more specifically to a radio link recovery method and a terminal device.

### BACKGROUND

Release 18 (R18) introduces layer 1/layer 2 (L1/L2)-triggered mobility (LTM), and in this method, a serving cell of a terminal device can be changed while a higher layer configuration remains unchanged. However, when a channel state deteriorates, LTM may fail, and in this case, how to implement rapid recovery of a radio link is an urgent problem to be solved.

### SUMMARY

The present disclosure provides a radio link recovery method and a terminal device. The following describes various aspects in the present disclosure.

In a first aspect, an embodiment of the present disclosure provides a radio link recovery method, including the following operations.

A terminal device acquires a first parameter of a serving cell and/or LTM candidate cell(s), here, the first parameter is used to represent channel quality of the serving cell and/or the LTM candidate cell(s).

The terminal device determines, based on the first parameter of the serving cell and/or the LTM candidate cell(s), whether to execute a radio link recovery operation.

In a second aspect, an embodiment of the present disclosure provides a terminal device, including an acquisition unit and determination unit.

The acquisition unit is configured to acquire a first parameter of a serving cell and/or LTM candidate cell(s), here, the first parameter is used to represent channel quality of the serving cell and/or the LTM candidate cell(s).

The determination unit is configured to determine, based on the first parameter of the serving cell and/or the LTM candidate cell(s), whether to execute a radio link recovery operation.

In a third aspect, an embodiment of the present disclosure provides a terminal device, including a processor and a memory.

The memory is configured to store one or more computer programs, and the processor is configured to invoke the computer programs in the memory, to enable the terminal device to perform some or all of the operations of the method in the first aspect.

In a fourth aspect, an embodiment of the present disclosure provides an apparatus, including a processor configured to invoke a program from a memory to execute the method as described in the first aspect.

In a fifth aspect, an embodiment of the present disclosure provides a chip, including a memory and a processor. Here, the processor can invoke and run a computer program from the memory, to execute the method as described in the first aspect.

In a sixth aspect, an embodiment of the present disclosure provides a computer-readable storage medium storing a computer program, and the computer program enables a communication device to execute the method as described in the first aspect.

In a seventh aspect, an embodiment of the present disclosure provides a computer program product, including a non-transitory computer-readable storage medium storing a computer program, here, the computer program can be operated to enable a communication device to execute the method as described in the first aspect. In some implementations, the computer program product may be a software installation package.

In the embodiments of the present disclosure, a situation of channel deterioration may be predicted/anticipated based on the first parameter of the LTM candidate cell and/or the serving cell, so that the radio link recovery operation is executed earlier, which helps shorten the duration in which the terminal device is in a poor channel connection scenario, and facilitates rapid recovery of a radio link.

### BRIEF DESCRIPTION OF THE DRAWINGS

FIG. 1 is a diagram of a wireless communication system applied in an embodiment of the present disclosure.
FIG. 2 is a diagram of a radio link detection procedure.
FIG. 3 is a diagram of a cell switch procedure.
FIG. 4 is a diagram of a LIM-based cell switch procedure.
FIG. 5 is a flowchart of a radio link recovery method provided in an embodiment of the present disclosure.
FIG. 6 is an exemplary diagram of meeting a first condition according to an embodiment of the present disclosure.
FIG. 7 is an exemplary diagram of not meeting a first condition according to an embodiment of the present disclosure.
FIG. 8 is a structural diagram of a terminal device provided by an embodiment of the present disclosure.
FIG. 9 is a structural diagram of an apparatus provided by an embodiment of the present disclosure.

### DETAILED DESCRIPTION

The technical solutions in the present disclosure will be described below with reference to the drawings.

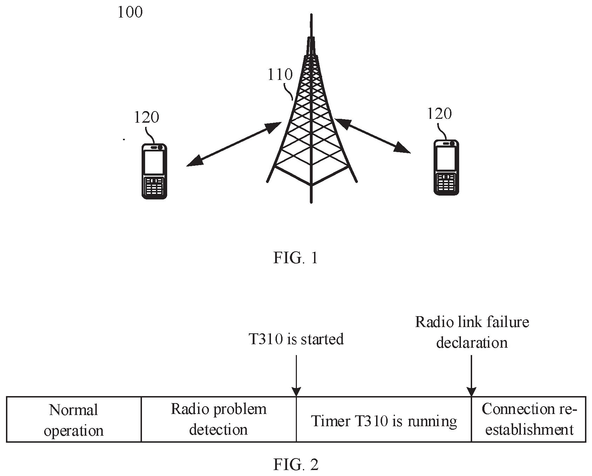

FIG. 1 is a wireless communication system 100 applied in an embodiment of the present disclosure. The wireless communication system 100 may include a network device 110 and terminal devices 120. The network device 110 may be a device that communicates with the terminal device 120. The network device 110 may provide communication coverage for a particular geographic region and may communicate with the terminal device 120 located within the coverage region.

FIG. 1 illustratively illustrates one network device and two terminals. Optionally, the wireless communication system 100 may include multiple network devices, and other numbers of terminal devices can be included within the coverage range of each network device. The embodiment of the present disclosure is not limited thereto.

Optionally, the wireless communication system 100 may further include a network controller, a mobile management entity, and other network entities. The embodiment of the present disclosure is not limited thereto.

It should be understood that the technical solution in the embodiments of the present disclosure is applicable to various communication systems, such as: fifth generation (5G) systems or new radio (NR) systems, long term evolution (LTE) systems, LTE frequency division duplex (FDD) systems, LTE time division duplex (TDD) systems, and the like. The technical solution provided by the present disclosure may also be applied to future communication systems, such as sixth generation mobile communication systems, satellite communications systems, and the like.

The terminal device in the embodiment of the present disclosure may also be referred to as user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent or a user apparatus. The terminal device in the embodiment of the present disclosure may be a device that provides voice and/or data connectivity to a user, and may be used to connect people, things, and machines, such as handheld devices and vehicle-mounted devices having wireless connection functions, and the like. The terminal device in the embodiment of the present disclosure may be a mobile phone, a tablet computer (Pad), a laptop, a handheld computer, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminals in a smart home, or the like. Optionally, the UE may be used to act as a base station. For example, the UE may act as a scheduling entity, which provides a sidelink signal between UEs in vehicle-to-everything (V2X) or device-to device (D2D) or the like. For example, a cellular telephone and a car use sidelink signals to communicate with each other. A cellular telephone and a smart home device communicate between each other without relaying a communication signal through a base station.

The network device in the embodiment of the present disclosure may be a device used to communicate with a terminal device. The network device may also be referred to as an access network device or a radio access network device. For example, the network device may be a base station. The network device in the embodiment of the present disclosure may refer to a radio access network (RAN) node (or device) that connects a terminal device to a wireless network. The base station may broadly cover various names such as the following or be replaced with the following names, such as: Node B (NodeB), evolved NodeB (eNB), next generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, and the like. The base station may be a macro base station, a micro base station, a relay node, a donor node or the like, or a combination thereof. The base station may also refer to a communication module, a modem, or a chip provided within the above device or apparatus. The base station may also be a device that performs a base station function in a mobile switching center and device-to-device (D2D), vehicle-to-everything (V2X) and machine-to-machine (M2M) communication, a network-side device in a 6G network, a device that performs a base station function in a future communication system, or the like. The base station may support networks with the same or different access technologies. The embodiments of the present disclosure do not limit the specific technology and specific device form adopted by the network device.

The base station may be fixed or mobile. For example, a helicopter or drone may be configured to act as a mobile base station, and one or more cells may move based on the location of the mobile base station. In other examples, a helicopter or drone may be configured to function as a device that communicates with another base station.

In some deployments, the network device in the embodiment of the present disclosure may refer to a CU or a DU, or the network device includes a CU and a DU. The gNB may further include an AAU.

The network device and the terminal device may be deployed on land, including indoor or outdoor environments, handheld or vehicle-mounted arrangements; or may be deployed on the surface of water; or may be deployed in an airplane, a balloon, and a satellite in the air. In the embodiments of the present disclosure, scenarios in which the network device and the terminal device are located are not limited.

It should be understood that all or part of the functions of the communication device in the present disclosure may also be implemented by software functions running on hardware, or by virtualization functions instantiated on a platform (e.g., a cloud platform).

With people's pursuit of speed, latency, high-speed mobility, and energy efficiency, and the diversity and complexity of services in future life, the 3rd generation partnership project (3GPP) international standards organization began to develop 5G. Main application scenarios of 5G may include: enhanced mobile broadband (eMBB), ultra reliable low latency communications (URLLC), and massive machine type communication (mMTC).

For ease of understanding, the following describes a communication procedure in the embodiments of the present disclosure.

### Radio link failure (RLF)

To ensure communication quality, a terminal device in a radio resource control (RRC) connected state (RRC_CONNECTED) continuously measures the downlink radio link quality of a serving cell during movement, and a network device may determine a synchronization state and an out-of-synchronization state of a channel based on the signal quality (such as the signal interference noise ratio (SINR)) of a synchronization signal/physical broadcast channel (PBCH) block (SSB) or a channel state information-reference signal (CSI-RS).

FIG. 2 is a schematic diagram of a radio link detection process. With reference to FIG. 2, in a radio problem detection phase, when block error rates (BLERs) for N310 (a fixed value, configured by a network) physical downlink control channels (PDCCHs) are continuously detected to be greater than 10%, it is considered that out-of-synchronization has occurred, and a timer T310 is started. Before the timer T310 expires, if BLERs for N311 (a fixed value, configured by the network) PDCCHs are continuously detected to be less than 2%, it is considered that a signal is re-synchronized, the timer T310 is stopped (not illustrated in FIG. 2), and the radio link of the terminal device is recovered. Otherwise, the timer T310 expires, a radio link failure occurs (as illustrated in FIG. 2), and a connection re-establishment procedure is triggered.

In a wireless communication system, a terminal device may move from one cell (also referred to as a "source cell") to another cell (also referred to as a "target cell"), that is, cell switch. The following describes a conditional handover mechanism in the cell switch.

### Conditional handover

For the conditional handover mechanism, the network device may send conditional handover configuration information to the terminal device, to configure, for the terminal device, configuration information associated with at least one conditional handover candidate cell. Correspondingly, after receiving the conditional handover configuration information, the terminal device starts to execute a conditional handover evaluation procedure (that is, starts to execute a handover condition evaluation task related to conditional handover), to evaluate whether a handover condition associated with the at least one conditional handover candidate cell is met. When the handover condition associated with the at least one conditional handover candidate cell is met, the terminal device may select a conditional handover candidate cell that meets the handover condition to initiate a handover procedure, and perform handover from the source cell (or referred to as a "current serving cell") to the selected conditional handover candidate cell that meets the handover condition (the selected conditional handover candidate cell that meets the handover condition may also be referred to as a "target cell").

In the conditional handover, the serving cell decides, based on a measurement report (reported when RSRP is lower than a preset threshold), one or more candidate cells for the conditional handover, sends a handover request to the candidate cell(s), and acquires configuration information of the candidate cell(s), and then the serving cell sends a conditional handover command to the terminal device. The terminal device determines, based on measurement result(s) of the candidate cell(s), whether a conditional handover triggering condition (included in the conditional handover command) is met, and if it is found that a candidate cell meets the handover condition, performs a subsequent random access procedure to the cell.

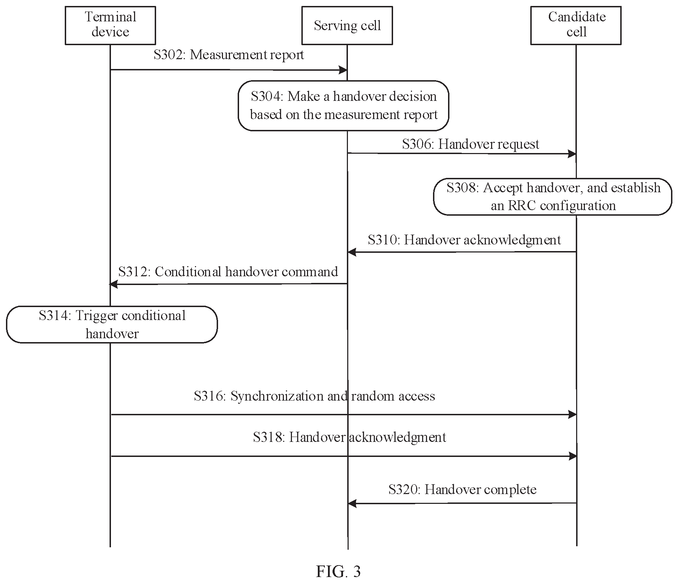

FIG. 3 is a schematic diagram of a cell switch procedure. The method illustrated in FIG. 3 includes operations S302 to S320.

In operation S302, a terminal device reports a measurement report to a serving cell.

In operation S304, the serving cell makes a handover decision based on the measurement report.

In operation S306, the serving cell initiates a handover request to a candidate cell.

In operation S308, the candidate cell accepts the handover and establishes an RRC configuration.

In operation S310, the candidate cell sends handover acknowledgment information to the serving cell.

The handover acknowledgment information may include the foregoing RRC configuration.

In operation S312, the serving cell issues a conditional handover command to the terminal device.

In operation S314, the terminal device triggers a conditional handover.

Before triggering the conditional handover, the terminal device needs to measure a related parameter, and if a measurement result meets a handover condition, the terminal device triggers the conditional handover.

In operation S316, the terminal device executes synchronization and random access with the candidate cell.

In operation S318, the terminal device sends the handover acknowledgment information to the candidate cell.

In operation S320, the candidate cell sends a handover complete to the terminal device.

In some embodiments, the handover condition in the cell switch may include an A3 event, that is, the RSRP of the target cell > the RSRP of the serving cell + hysteresis.

When multiple candidate cells are configured for the conditional handover, the terminal device may attempt to access one of the candidate cells. However, when the access fails due to factors such as channel deterioration and load balancing, the terminal device may reselect a candidate cell to attempt to access. If failure occurs again, the conditional handover procedure fails, and the terminal device needs to perform a connection re-establishment procedure.

In the related art, the handover mechanism is triggered by L3 measurement and completed through RRC signaling. L3-based handover requires re-configuration of the RRC or packet data convergence protocol (PDCP) layer and resetting of the media access control (MAC) layer and/or the physical layer.

R18 introduces LTM. Through L1/L2 signaling, it enables the change of the serving cell of the terminal device while maintaining a higher layer configuration unchanged, thereby reducing latency, reducing overhead, and shortening interruption time. The following describes a cell switch procedure under LTM.

### LTM

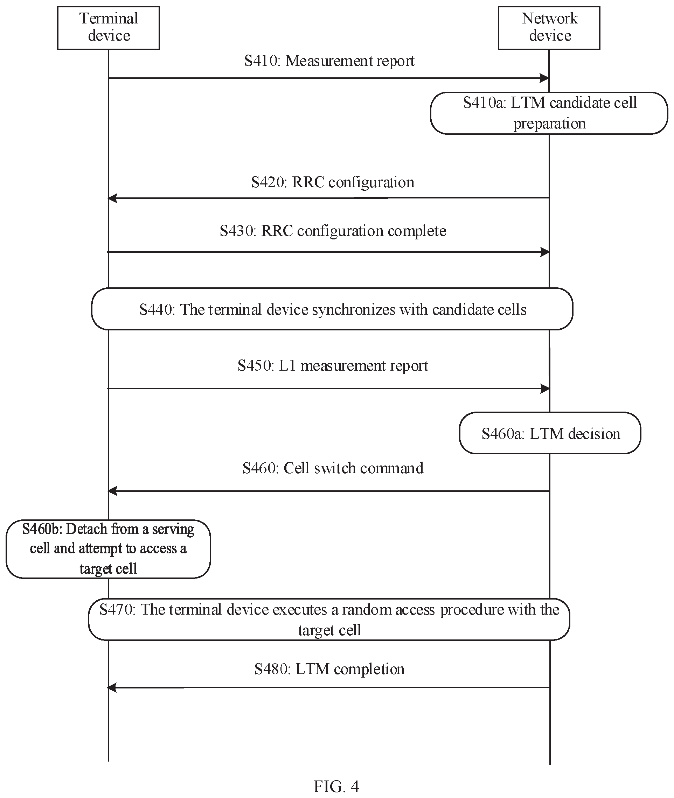

FIG. 4 is a schematic diagram of a LIM-based cell switch procedure. The switch procedure illustrated in FIG. 4 relates to a terminal device and a network device such as a gNB, and a procedure 400 may include operations S410 to S480. Before executing the cell switch, the terminal device illustrated in FIG. 4 is in an RRC _CONNECTED state.

In operation S410, the terminal device reports a measurement report to the network device.

In operation S410a, the network device executes LTM candidate cell preparation.

In operation S420, the network device sends RRC configuration information to the terminal device. The RRC configuration information includes an LTM candidate configuration.

In operation S430, the terminal device sends RRC configuration complete information to the network device.

In operation S440, the terminal device synchronizes with candidate cell(s). Synchronization between the terminal device and the candidate cell(s) includes uplink synchronization and downlink synchronization.

In operation S450, the terminal device reports an L1 measurement report to the network device.

In operation S460a, the network device executes an LTM decision. The LTM decision may be based on a measurement result in the L1 measurement report acquired in the operation S450.

In operation S460, the network device sends a cell switch command to the terminal device. The switch command may be issued through a MAC CE.

In operation S460b, the terminal device detaches from a serving cell and attempts to access a target LTM cell.

In operation S470, the terminal device executes a random access procedure with the target cell.

In operation S480, LTM is completed.

In the foregoing switch procedure, the operation S410 to the operation S430 are an LTM preparation process, the operation S440 is an early synchronization process, the operation S450 to operation S470 are an LTM execution process, and the operation S480 is LTM completion.

As illustrated in FIG. 4, in the LTM execution phase, the terminal device periodically reports the L1 measurement result, the network device may make the LTM decision based on the measurement result, and issue the cell switch command in the form of the MAC CE, and the terminal device detaches from the serving cell and attempts to access the target LTM cell.

In the foregoing LTM decision, the terminal device retains LTM candidate cell configuration information after completing the switch, to facilitate a subsequent switch.

In the case of LTM, because the cell switch is based on L1 reference signal receiving power (RSRP) and lacks L3 filtering, handover to a cell with poor channel conditions is more likely to occur, resulting in more RLFs or handover failures (HOFs).

In the case of LTM failure, the radio link needs to be recovered. The recovery methods for the LTM failure proposed in the related art are all used after RLF or HOF declaration occurs. For example, if the network configures LTM candidate cells, the terminal device may first attempt to perform LTM handover after the RLF, to avoid a cell re-selection and re-establishment procedure. For another example, after the RLF, if the cell selected by the cell re-selection is among the LTM candidate cells, the channel of the cell may be quickly recovered in a manner similar to conditional handover. For another example, in the case of the HOF, an existing timer T304 may be reused or a timer similar to T304 may be used to declare connection re-establishment.

During movement of the terminal device, a channel inevitably deteriorates suddenly due to the occurrence of situations such as blocking by an obstacle. In a current RLF mechanism, quick recovery of the channel is only performed after a timer T310 expires (that is, after the RLF is declared), for example, a connection re-establishment procedure is triggered. However, the duration of the timer T310 is usually 1s, which means that the terminal device is under poor channel conditions for at least 1s, greatly affecting the user experience.

Therefore, under channel deterioration, how to implement quick recovery of a radio link is an urgent problem to be solved.

In the foregoing recovery methods for the LTM failure, the connection re-establishment is triggered after the RLF or the HOF declaration occurs because the terminal device has only the configuration information of a current serving cell but lacks configuration information of another cell (neighboring cell). The terminal device can start to search for and acquire the neighboring cell configuration information only after the RLF or the HOF is declared.

However, as mentioned above, in LTM, the terminal device has retained the LTM candidate cell configuration information. Therefore, in the embodiments of the present disclosure, a channel deterioration situation may be predicted/anticipated based on the information about the LTM candidate cells, to solve the foregoing problem.

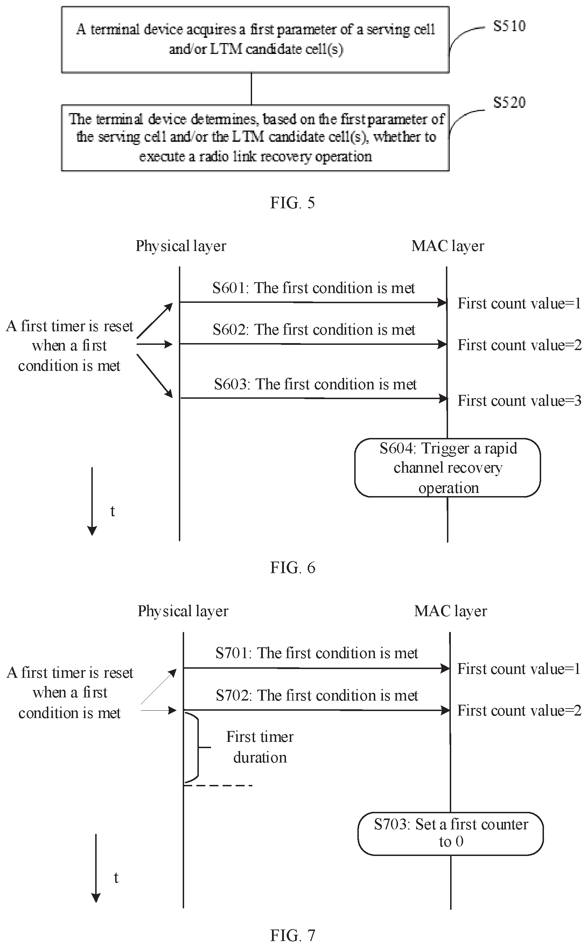

FIG. 5 is a schematic flowchart of a radio link recovery method provided by an embodiment of the present disclosure. The method illustrated in FIG. 5 may include operations S510 and S520.

In operation S510, a terminal device acquires a first parameter of a serving cell and/or LTM candidate cell(s), where the first parameter is used to represent channel quality of the serving cell and/or the LTM candidate cell(s).

In other words, in the operation S510, the terminal device acquires the first parameter of the serving cell and/or the first parameter of the LTM candidate cell. The first parameter of the serving cell is used to represent the channel quality or communication quality of the serving cell, and the first parameter of the LTM candidate cell is used to represent the channel quality or communication quality of the LTM cell.

In operation S520, the terminal device determines whether to execute a radio link recovery operation based on the first parameter of the serving cell and/or the LTM candidate cell(s).

The first parameter may be SINR and/or RSRP.

Acquiring the first parameter may be, for example, measuring the first parameter, for example, measuring the first parameter through a physical layer.

The LTM candidate cell may be a candidate cell configured in the LTM decision procedure mentioned above.

Based on the first parameter of the LTM candidate cell(s) and/or the serving cell, the terminal device may quickly or as early as possible discover a channel deterioration situation, or may predict/anticipate the channel deterioration situation. Based on the prediction/anticipation result, the radio link recovery may be executed as early as possible when the channel is about to deteriorate or has deteriorated, thereby helping shorten the duration in which the terminal device is in a poor channel connection scenario, and further helping improve user quality of service.

Whether to execute the radio link recovery operation may be based on whether the situation of the channel deterioration is about to occur or has occurred, or whether a situation of an RLF or an HOF is about to occur. A change in the first parameter may characterize a situation of the channel, and therefore, whether to execute the radio link recovery operation may be determined based on a relationship between the first parameter and a first condition. For example, when the first parameter of the serving cell and/or the LTM candidate cell(s) meets the first condition, the radio link recovery operation may be executed, or the terminal device executes the radio link recovery operation. For another example, if neither the first parameter of the serving cell nor the first parameter of the LTM candidate cell meets the first condition, the terminal device does not execute the radio link recovery operation.

The first condition may be associated with, for example, one or more of the following: a magnitude relationship between the first parameter of the serving cell and a threshold; a magnitude relationship between the first parameter of the LTM candidate cell and a threshold; and a magnitude relationship between the first parameter of the serving cell and the first parameter of the LTM candidate cell.

In general, when the channel quality of the serving cell is poor, the probability of a radio link failure occurring is higher. Therefore, the first condition may be associated with the magnitude relationship between the first parameter of the serving cell and the threshold. For example, the first condition may be that the first parameter of the serving cell is less than or equal to a second threshold.

In some cases, to improve decision accuracy, a channel situation of a neighboring cell further needs to be considered. Therefore, the first condition may be associated with the magnitude relationship between the first parameter of the LTM candidate cell and the threshold. For example, the first parameter of the LTM candidate cell is greater than or equal to a first threshold.

When there is a large difference between the channel quality of the serving cell and the channel quality of the neighboring cell, a radio link failure may occur, or better communication quality may be acquired after handover to the neighboring cell. Therefore, the first condition may be associated with the magnitude relationship between the first parameter of the serving cell and the first parameter of the LTM candidate cell.

For example, the first condition may be that the first parameter of the LTM candidate cell is greater than or equal to a sum of the first parameter of the serving cell and a first offset.

If the first parameter is RSRP, the value of the first offset may be, for example, greater than the hysteresis in the cell switch A3 event described above. In this way, the measurement report in the handover procedure can be used to determine whether the first condition is met.

For another example, the first condition may be that the first parameter of the serving cell is less than or equal to a third threshold, and the first parameter of the LTM candidate cell is greater than or equal to a fourth threshold.

It should be noted that the offset and the thresholds may be configured by the network device, and this is not limited in the present disclosure.

In order to improve the reliability of the radio link recovery method, multiple determinations may be performed regarding whether the first parameter of the serving cell and/or the LTM candidate cell(s) meets the first condition.

In some embodiments, whether the first parameter of the serving cell and/or the LTM candidate cell(s) meets the first condition may include: within a first time period, first parameters of the serving cell and/or the LTM candidate cell(s) corresponding to different determination time points all meet the first condition. For example, the first time period includes N determination time points, and if the first parameters of the serving cell and/or the LTM candidate cell(s) at the N determination time points all meet the first condition, it is considered that the first parameter of the serving cell and/or the LTM candidate cell(s) meets the first condition. If the first parameters of the serving cell and/or the LTM candidate cell(s) at only some of the N determination time points meet the first condition, it is considered that the first parameter of the serving cell and/or the LTM candidate cell(s) does not meet the first condition.

In some embodiments, whether the first parameter of the serving cell and/or the LTM candidate cell(s) meets the first condition may include: within the first time period, the number of times that the first parameter of the serving cell and/or the LTM candidate cell(s) meets the first condition is greater than or equal to a fifth threshold. For example, the first time period is 80 ms, the fifth threshold is five times, and if it is detected that the number of times that the first parameter of the serving cell and/or the LTM candidate cell(s) meets the first condition is six within the first time period, it is considered that the first parameter of the serving cell and/or the LTM candidate cell(s) meets the first condition.

In some embodiments, whether the first parameter of the serving cell and/or the LTM candidate cell(s) meets the first condition may include: within the first time period, a ratio of the first parameter of the serving cell and/or the LTM candidate cell(s) meeting the first condition is greater than or equal to a sixth threshold. The ratio of the first parameter of the serving cell and/or the LTM candidate cell(s) meeting the first condition may be a result of dividing 'the number of times that the first parameter of the serving cell and/or the LTM candidate cell(s) meets the first condition' by 'the total number of detection and determination instances of whether the first parameter of the serving cell and/or the LTM candidate cell(s) meets the first condition'.

For example, the first time period is 80 ms, the sixth threshold is 80%, and if within the first time period, eight determination and detection instances are performed regarding whether the first parameter of the serving cell and/or the LTM candidate cell(s) meets the first condition, with 7 of these instances yielding the results that the first condition is met, then the ratio of the first parameter of the serving cell and/or the LTM candidate cell(s) meeting the first condition is 87.5%, that is, it is considered that the first parameter of the serving cell and/or the LTM candidate cell(s) meets the first condition.

In some embodiments, whether the first parameter of the serving cell and/or the LTM candidate cell(s) meets the first condition may include: the number of consecutive times that the first parameter of the serving cell and/or the LTM candidate cell(s) meets the first condition is greater than or equal to a seventh threshold.

For example, if six detection and determination instances are performed regarding whether the first parameter of the serving cell and/or the LTM candidate cell(s) meets the first condition, and the seventh threshold is five times, then in the first to the fifth detection and determination instances, or the second to sixth detection and determination instances, the first parameters of the serving cell and/or the LTM candidate cell(s) all meet the first condition, it is considered that the first parameters of the serving cell and/or the LTM candidate cell(s) all meet the first condition.

In some embodiments, whether the first parameter of the serving cell and/or the LTM candidate cell(s) meets the first condition may include: within multiple consecutive second time periods, first parameters of the serving cell and/or the LTM candidate cell(s) all meet the first condition. For example, the second time period is 30 ms, and in three consecutive second time periods, when the first parameter of the serving cell and/or the LTM candidate cell(s) meets the first condition within each 30-ms time period, it is considered that the first parameter of the serving cell and/or the LTM candidate cell(s) meets the first condition.

In each of the multiple consecutive second time periods, one or more determinations may be performed regarding whether the first parameter of the serving cell and/or the LTM candidate cell(s) meets the first condition, that is, each second time period may include one or multiple determination time points.

If each of the multiple consecutive second time periods includes the multiple determination time points, then whether the first parameter of the serving cell and/or the LTM candidate cell(s) meets the first condition may include: in each of the multiple consecutive second time periods, the number of times that the first parameter of the serving cell and/or the LTM candidate cell(s) meets the first condition is greater than or equal to an eighth threshold. For example, the second time period is 30 ms, the eighth threshold is two times, and when within each of three consecutive second time periods, the number of times that the first parameter of the serving cell and/or the LTM candidate cell(s) meets the first condition is two, it is considered that the first parameter of the serving cell and/or the LTM candidate cell(s) meets the first condition.

In some embodiments, whether the first parameter of the serving cell and/or the LTM candidate cell(s) meets the first condition may include: in each of the multiple consecutive second time periods, a ratio of the first parameter of the serving cell and/or the LTM candidate cell(s) meeting the first condition is greater than or equal to a ninth threshold. The ratio of meeting the first condition mentioned herein may refer to a result of dividing "the number of times that the first parameter of the serving cell and/or the LTM candidate cell(s) meets the first condition" by "the total number of detection and determination instances of whether the first parameter of the serving cell and/or the LTM candidate cell(s) meets the first condition" in each of the multiple consecutive second time periods. For example, the second time period is 30 ms, the ninth threshold is 50%, and if within each of three consecutive second time periods, three determination and detection instances are performed regarding whether the first parameter of the serving cell and/or the LTM candidate cell(s) meets the first condition, with 2 of these instances yielding the results that the first condition is met, then the satisfaction ratio is 66.7%, that is, it is considered that the first parameter of the serving cell and/or the LTM candidate cell(s) meets the first condition.

In some embodiments, whether the first parameter of the serving cell and/or the LTM candidate cell(s) meets the first condition may include: before a first timer expires, the number of times that the first parameter of the serving cell and/or the LTM candidate cell(s) meets the first condition is greater than or equal to a tenth threshold. For example, during the operation of the first timer, if the first parameter of the serving cell and/or the LTM candidate cell(s) meets the first condition, a first count value is increased by 1, and the first timer is reset. A cyclic determination continues to be performed regarding whether the first condition is met before the first timer expires, and if the first count value is greater than or equal to the tenth threshold, and the first timer does not expire, it is considered that the first parameter of the serving cell and/or the LTM candidate cell(s) meets the first condition. If the first timer expires during the detection process (that is, the first parameter of the serving cell and/or the LTM candidate cell(s) does not meet the first condition within the time period), it is considered that the first parameter of the serving cell and/or the LTM candidate cell(s) does not meet the first condition. In this case, the first count value may be set to zero, and detection calculation is restarted.

Whether the first parameter of the serving cell and/or the LTM candidate cell(s) meets the first condition may include one or more of the above cases.

In some embodiments, determination of whether the first parameter of the serving cell and/or the LTM candidate cell(s) meets the first condition by the terminal device may be periodic determination or aperiodic determination. That is to say, a determination timing for the first condition, for example, the above determination time points, may be periodic time points or aperiodic time points.

The aperiodic time points may be, for example, randomly selected time points. For example, M time points are randomly selected within the first time period as the determination time points.

The determination time points are the periodic time points, that is, the terminal device may determine, based on a determination period, whether the first parameter of the serving cell and/or the LTM candidate cell(s) meets the first condition, and the determination time points may be determined based on the determination period. As an example, if the first time period is 30 ms and the determination period is 10 ms, the first time period may include three time determination points, such as a 10th ms, a 20th ms, and a 30th ms in the first time period.

If the determination of whether the first parameter of the serving cell and/or the LTM candidate cell(s) meets the first condition by the terminal device is periodic determination, determination periods corresponding to different first parameters may be the same or may be different. For example, if the first parameter includes the SINR and the RSRP, determination periods for the SINR and the RSRP may be the same, to facilitate implementation. As an example, the determination periods for the SINR and the RSRP, for example, may both be configured to be 10 ms. For another example, if the first parameter includes the SINR and the RSRP, determination periods for the SINR and the RSRP may be different. As an example, the determination period for the SINR may be configured to be 10 ms, and the determination period for the RSRP may be configured to be 20 ms. In this way, the determination periods of different first parameters may be determined based on characteristics of the different first parameters, for example, change characteristics of the different first parameters, thereby helping improve flexibility of determination period configuration.

In addition, a timeout duration of the timer may be set based on a usage requirement. In some embodiments, the timeout duration of the first timer may be set to a duration corresponding to the determination period.

In some embodiments, the determination process for the first condition may be executed in multiple manners.

For example, a physical layer of the terminal device determines whether the first parameter of the serving cell and/or the LTM candidate cell(s) meets the first condition, and transmits a determination result to a MAC layer of the terminal device. The physical layer reports, to the MAC layer, the determination result that whether the first parameter of the serving cell and/or the LTM candidate cell(s) meets the first condition, thereby helping save transmission resources.

For another example, a physical layer of the terminal device transmits the first parameter of the serving cell and/or the LTM candidate cell(s) to a MAC layer of the terminal device, and the MAC layer of the terminal device determines whether the first parameter of the serving cell and/or the LTM candidate cell(s) meets the first condition. In this way, the MAC layer may obtain measurement results of all first parameters, thereby helping learn about a change situation of the first parameter.

For another example, a physical layer of the terminal device determines whether the first parameter of the serving cell and/or the LTM candidate cell(s) meets the first condition, and if so, transmits a determination result to a MAC layer of the terminal device; if not, not transmit the determination result to the MAC layer of the terminal device, thereby further saving transmission resources.

Whether to execute the radio link recovery operation may be determined based on the above determination result associated with the first parameter. The following describes the radio link recovery operation in detail.

In some embodiments, the radio link recovery operation includes conditional LTM and/or connection re-establishment.

A connection re-establishment process may generally include cell search, downlink synchronization, system information acquisition, uplink synchronization, and resource allocation. A cell switch process may generally include downlink synchronization, uplink synchronization, and resource allocation. It can be seen that, compared with the cell switch process, the connection re-establishment process has two additional operations of "cell search and system information acquisition". In general, the duration required for the cell search and the system information acquisition exceeds the duration required for the uplink/downlink synchronization and the resource allocation.

Therefore, the radio link recovery operation may include LTM handover. Before the radio link fails, the terminal device may hand over to another cell (e.g., an LTM candidate cell) based on conditional LTM. Compared with direct connection re-establishment, this helps reduce a service interruption time of the terminal device, or helps increase a speed of radio link recovery. The configuration information of the LTM candidate cells stored in the terminal device mentioned above provides support for implementation of this solution.

The connection re-establishment may include RRC connection re-establishment and/or LTM connection re-establishment. The LTM connection re-establishment may also refer to LTM-based connection re-establishment, or connection re-establishment associated with LTM.

If the signal quality of the serving cell is poor, which may lead to failure in receiving the cell switch command, then connection re-establishment may be directly executed, to quickly recover the radio link. If the channel quality of the LTM candidate cells all are poor, the radio link may not be recovered effectively by executing the cell switch, or a situation in which the cell switch fails may occur. In this case, connection re-establishment may be directly executed to avoid ineffective handover to the LTM candidate cell, or to avoid multiple LTM handover failures, thereby helping increase a recovery speed of the radio link.

In some embodiments, the above connection re-establishment may be connection re-establishment for an RLF, or may be connection re-establishment for an HOF.

In some embodiments, the radio link recovery operation is conditional LTM or connection re-establishment, which may be determined based on one or more of the following pieces of information: first indication information sent by a network device; and whether the LTM candidate cell is configured with conditional LTM.

If the first indication information indicates that the executed radio link recovery operation is conditional LTM, the terminal device executes conditional LTM. If the first indication information indicates that the executed radio link recovery operation is connection re-establishment, the terminal device executes connection re-establishment. The first indication information may be carried in, for example, a RRC signaling, a MAC CE, or a DCI.

If the LTM candidate cell is configured with conditional LTM, this cell may be used as a candidate cell under conditional LTM. In this case, the conditional LTM configuration is not empty, and the terminal device may execute conditional LTM to recover the radio link.

If a cell of the LTM candidate cells is not configured with conditional LTM, this cell may not be used as a candidate cell under conditional LTM. If none of the LTM candidate cells is configured with conditional LTM, that is, the conditional LTM configuration is empty, the terminal device may execute connection re-establishment to recover the radio link.

During a process in which the terminal device executes conditional LTM, if a second condition is met, the terminal device may execute connection re-establishment, thereby facilitating rapid recovery of the radio link.

In some embodiments, the second condition may be associated with one or more of the following: a second timer related to radio problem detection; and information related to conditional LTM failure.

The second condition may include that, for example, the second timer expires. The second timer related to radio problem detection may directly adopt the timer T310 mentioned above, or may be a newly defined timer used for the radio problem detection. The second timer may be started when the channel is out of synchronization, for example, started when a bit error rate is greater than a threshold.

As described above, the conditional LTM may fail or experience multiple failures, and therefore, during a process in which the terminal device executes conditional LTM handover, the second condition for whether to execute connection re-establishment may be associated with the information related to the conditional LTM failure.

For example, the second condition may include that the number of conditional LTM failures is greater than or equal to an eleventh threshold. The eleventh threshold may be an integer greater than or equal to 0. In some cases, if the configured eleventh threshold is 0, it may indicate that the terminal device does not support conditional LTM.

For another example, all conditional LTM executed for target candidate cell(s) fails, where the target candidate cell(s) are candidate cell(s) configured with conditional LTM in the LTM candidate cell(s) described above.

It should be noted that, if the second condition is met, the terminal device may reset the second timer while executing connection re-establishment.

According to the method provided in the embodiment of the present disclosure, the RLF/HOF can be quickly discovered, and the terminal device is handed over to a cell with a better channel condition in advance or connection re-establishment is triggered in advance, thereby reducing the duration of service deterioration/interruption for the UE and improving user service experience.

In some embodiments, measurement of the first parameter may be continuously and periodically performed. Considering complexity and measurement overheads of measurement of the first parameter, and given that the channel state is relatively stable when the second timer related to radio problem detection is not started, in some other embodiments, measurement of the first parameter may be performed after the second timer is started, for example, periodic measurement is performed.

To further reduce the measurement overheads and energy consumption of the terminal device, measurement relaxation may be applied to the measurement of the first parameter. The following describes multiple manners of measurement relaxation of the first parameter.

In some embodiments, a measurement period of the first parameter may be adjusted based on the usage to reduce the measurement overheads.

For example, the measurement period of the first parameter is determined based on one or more of the following: whether the second timer related to radio problem detection is started; a mobility speed of the terminal device; an area in which the terminal device is located; pre-configuration information of the terminal device; and second indication information sent by the network device.

As described above, the channel state is relatively stable when the second timer related to radio problem detection is not started, and therefore, as an implementation, the measurement period of the first parameter may be increased before the second timer is started. That is to say, the measurement period used before the second timer is started is greater than the measurement period used after the second timer is started. For example, before the second timer is started, the measurement period may be 40 ms, and after the second timer is started, the measurement period may be 10 ms.

Fast movement of the terminal device may cause a fast change of the channel state and correspondingly, when the terminal device moves at a relatively low speed, the channel state is relatively stable. Therefore, as an implementation, a relatively small measurement period can be used when the terminal device moves relatively fast, and a relatively large measurement period can be used when the terminal device moves relatively slow. For example, when the terminal device moves relatively fast, the measurement period may be 10 ms, and when the terminal device moves relatively slow, the measurement period may be 30 ms.

If the terminal device is located in an area in which the first parameter is prone to change, a relatively small measurement period may be used. If the terminal device is located in an area in which the first parameter is not prone to change, a relatively large measurement period may be used. Whether the first parameter in the area is prone to change may be determined based on a prediction result of a change situation of the first parameter. For example, the change situation of the first parameter may be predicted by using an artificial intelligence (AI) technology. As an example, when an AI model predicts that the first parameter of the serving cell may deteriorate, or the terminal device is located in an area in which the first parameter is prone to change, the relatively small measurement period may be used. When the AI model predicts that the first parameter of the serving cell does not deteriorate, or the terminal device is located in an area in which the first parameter is not prone to change, the relatively large measurement period may be used.

The measurement period of the first parameter may be determined based on pre-configuration information of the terminal device, for example, the configuration information of the terminal device may be used to configure the measurement period of the first parameter. For example, different cells may be configured with different measurement periods, or may be configured with the same measurement period. As an example, a cell with large coverage may be configured with the relatively small measurement period, and a cell with small coverage may be configured with the relatively large measurement period.

The measurement period of the first parameter may be determined based on second indication information sent by the network device, for example, the second indication information may be used to indicate the measurement period of the first parameter. For example, when detecting an increase in radio link monitoring (RLM) events in an area, such as a cell, the network device may send the second indication information, to indicate use of the relatively small measurement period. For another example, when detecting that a channel in an area is stable, with no RLM events occurring or infrequent RLM events occurring, the network device may send the second indication information, to indicate use of the relatively large measurement period.

In some other embodiments, the number of cells to be measured among LTM candidate cells may be reduced, or at least part of LTM candidate cells may be measured, to reduce the measurement overheads.

The at least part of LTM candidate cells may be determined based on one or more of the following: whether a timing advance of the LTM candidate cell is known; whether the LTM candidate cell is configured with a contention-free random access resource; statistical information of the LTM candidate cell serving as a re-establishment cell; cell re-establishment policy information of an area in which the terminal device is located; quantity limit information of the LTM candidate cells; LTM candidate cell(s) indicated by the network device; and pre-configured LTM candidate cell(s) required to be measured.

For example, the at least part of LTM candidate cells may include cell(s) of which timing advance(s) is/are known among the LTM candidate cells. For another example, the at least part of LTM candidate cells may include cell(s) configured with contention-free random access resource(s) among the LTM candidate cells. For another example, the at least part of LTM candidate cells may include cell(s) that have a high frequency of being used as a re-establishment cell among the LTM candidate cells. For another example, the at least part of LTM candidate cells may include cell(s) indicated by the cell re-establishment policy information of the area in which the terminal device is located. Here, the re-establishment policy may be acquired based on the AI technology, such as a reinforcement learning technology. For another example, based on quantity limit information of the LTM candidate cells, the quantity of the at least part of LTM candidate cells may be determined. For another example, the at least part of LTM candidate cells may include LTM candidate cell(s) indicated by the network device. For another example, the at least part of LTM candidate cells may include pre-configured LTM candidate cell(s) required to be measured.

The at least part of LTM candidate cells may include one or more types of cells described above. As an example, if the quantity of the LTM candidate cells is limited to five cells, and there is one cell (denoted as a first cell) of which the timing advance is known among the LTM candidate cells, there are two cells (denoted as a second cell and a third cell) that have the high frequency of being used as the re-establishment cell among the LTM candidate cells, there is one LTM candidate cell (denoted as a fourth cell) indicated by the network device, and there is one cell (denoted as a fifth cell) that is configured with the contention-free random access resource among the LTM candidate cells, then the at least part of LTM candidate cells may include the first cell, the second cell, the third cell, the fourth cell, and the fifth cell.

Taking the tenth threshold being 3 as an example, and the content "the first parameter of the serving cell and/or the LTM candidate cell(s) meets the first condition, which includes that before the first timer expires, the number of times that the first parameter of the serving cell and/or the LTM candidate cell(s) meets the first condition is greater than or equal to the tenth threshold" mentioned above is described with reference to FIG. 6 and FIG. 7. FIG. 6 and FIG. 7 are described from a perspective of interactions between a physical layer and a MAC layer of a terminal device.

FIG. 6 is an example diagram of meeting a first condition according to an embodiment of the present disclosure. The procedure illustrated in FIG. 6 includes operations S601 to S604.

In the operation S601 to the operation S603, the physical layer reports, to the MAC layer, that the first condition is met.

In the foregoing operations, the first condition is met before the first timer expires, and therefore, the physical layer indicates, to the MAC layer, that the first condition is met, and resets the first timer. Each time the MAC layer receives information reported by the physical layer for indicating that the first condition is met, the MAC layer controls a first count value to be increased by 1, and after the operation S603 is executed, the first count value is 3.

In the operation S604, the MAC layer triggers a rapid channel recovery operation.

Because the tenth threshold is 3, when the first count value is 3, the number of times that the first condition is met is equal to the tenth threshold, that is to say, the first parameter of the serving cell and/or the LTM candidate cell(s) meets the first condition. Therefore, the MAC layer may trigger the rapid recovery operation of the channel.

FIG. 7 is an example diagram of not meeting a first condition according to an embodiment of the present disclosure. The procedure illustrated in FIG. 7 includes operations S701 to S703.

In the operation S701 and the operation S702, the physical layer reports, to the MAC layer, that the first condition is met.

In the foregoing operations, the first condition is met before the first timer expires, and therefore, the physical layer indicates, to the MAC layer, that the first condition is met, and resets the first timer. Each time the MAC layer receives information reported by the physical layer for indicating that the first condition is met, the MAC layer controls a first count value to be increased by 1, and after the operation S702 is executed, the first count value is 2.

In the operation S703, the MAC layer sets a first counter to 0.

After the operation S702, before the first timer expires again, a situation in which the first condition is met does not occur, that is, the first count value does not meet the tenth threshold, that is to say, the first parameter of the serving cell and/or the LTM candidate cell(s) does not meet the first condition. Therefore, when the first timer expires, the MAC layer may set the first counter to zero.

It should be noted that the foregoing period, such as a relatively small period or a relatively large period, may be pre-configured, or may be dynamically indicated based on an actual situation.

It should be noted that, when the first condition is that RSRP of the LTM candidate cell is greater than or equal to the sum of the first parameter of the serving cell and the first offset, the first condition being met is different from a conventional handover event.

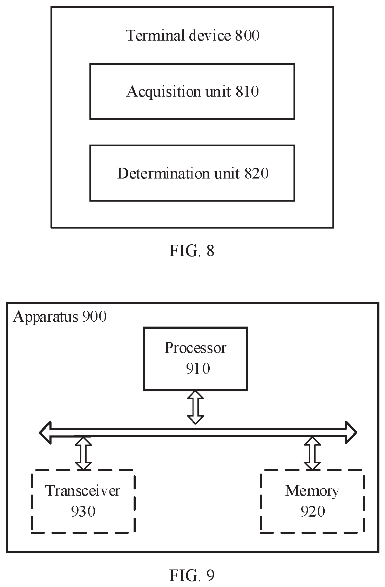

The method embodiments of the present disclosure are described in detail above with reference to FIGS. 1 to 7, and apparatus embodiments of the present disclosure will be described in detail below with reference to FIGS. 8 to 9. It should be understood that the description of the method embodiments corresponds to the description of the apparatus embodiments, and therefore, for the parts not described in detail, reference may be made to the foregoing method embodiments.

FIG. 8 is a schematic block diagram of a terminal device provided by an embodiment of the present disclosure. The terminal device 800 may include an acquisition unit 810 and a determination unit 820.

The acquisition unit 810 is configured to acquire a first parameter of a serving cell and/or LTM candidate cell(s). The first parameter is used to represent channel quality of the serving cell and/or the LTM candidate cell(s).

The determination unit 820 is configured to determine, based on the first parameter of the serving cell and/or the LTM candidate cell(s), whether to execute a radio link recovery operation.

In some embodiments, the first parameter includes an SINR and/or RSRP.

In some embodiments, the radio link recovery operation is executed when the first parameter of the serving cell and/or the LTM candidate cell(s) meets a first condition.

In some embodiments, the first condition is associated with one or more of the following: a magnitude relationship between the first parameter of the serving cell and a threshold; a magnitude relationship between the first parameter of the LTM candidate cell and a threshold; and a magnitude relationship between the first parameter of the serving cell and the first parameter of the LTM candidate cell.

In some embodiments, the first condition includes one or more of the following: the first parameter of the LTM candidate cell is greater than or equal to a sum of the first parameter of the serving cell and a first offset; the first parameter of the LTM candidate cell is greater than or equal to a first threshold; the first parameter of the serving cell is less than or equal to a second threshold; and the first parameter of the serving cell is less than or equal to a third threshold, and the first parameter of the LTM candidate cell is greater than or equal to a fourth threshold.

In some embodiments, the first parameter of the serving cell and/or the LTM candidate cell(s) meets the first condition, which includes at least one of the following: within a first time period, first parameters of the serving cell and/or the LTM candidate cell(s) corresponding to different determination time points all meet the first condition; within the first time period, the number of times that the first parameter of the serving cell and/or the LTM candidate cell(s) meets the first condition is greater than or equal to a fifth threshold; within the first time period, a ratio of the first parameter of the serving cell and/or the LTM candidate cell(s) meeting the first condition is greater than or equal to a sixth threshold; the number of consecutive times that the first parameter of the serving cell and/or the LTM candidate cell(s) meets the first condition is greater than or equal to a seventh threshold; within a plurality of consecutive second time periods, first parameters of the serving cell and/or the LTM candidate cell(s) all meet the first condition; in each of the plurality of consecutive second time periods, the number of times that the first parameter of the serving cell and/or the LTM candidate cell(s) meets the first condition is greater than or equal to an eighth threshold; in each of the plurality of consecutive second time periods, a ratio of the first parameter of the serving cell and/or the LTM candidate cell(s) meeting the first condition is greater than or equal to a ninth threshold; and before a first timer expires, the number of times that the first parameter of the serving cell and/or the LTM candidate cell(s) meets the first condition is greater than or equal to a tenth threshold.

In some embodiments, determination of whether the first parameter of the serving cell and/or the LTM candidate cell(s) meets the first condition by the terminal device is periodic determination, or aperiodic determination.

In some embodiments, if the determination of whether the first parameter of the serving cell and/or the LTM candidate cell(s) meets the first condition by the terminal device is periodic determination, determination periods corresponding to different first parameters are the same or different.

In some embodiments, the device further includes an execution unit, configured to execute one of the following: determining, by a physical layer of the terminal device, whether the first parameter of the serving cell and/or the LTM candidate cell(s) meets the first condition, and transmitting a determination result to a MAC layer of the terminal device; transmitting, by a physical layer of the terminal device, the first parameter of the serving cell and/or the LTM candidate cell(s) to a MAC layer of the terminal device, and determining, by the MAC layer of the terminal device, whether the first parameter of the serving cell and/or the LTM candidate cell(s) meets the first condition; or determining, by a physical layer of the terminal device, whether the first parameter of the serving cell and/or the LTM candidate cell(s) meets the first condition, and if so, transmitting a determination result to a MAC layer of the terminal device.

In some embodiments, the radio link recovery operation includes conditional LTM and/or connection re-establishment.

In some embodiments, the radio link recovery operation is conditional LTM or connection re-establishment, and is determined based on one or more of the following pieces of information: first indication information sent by a network device; and whether the LTM candidate cell is configured with the conditional LTM.

In some embodiments, the first indication information is carried in an RRC signaling, a MAC CE, or a DCI.

In some embodiments, the terminal device further includes: an execution unit, configured to execute connection re-establishment, if a second condition is met during a process in which the terminal device executes conditional LTM.

In some embodiments, the second condition is associated with one or more of the following: a first timer related to radio problem detection; and information related to conditional LTM failure.

In some embodiments, the second condition includes one or more of the following: the first timer expires; the number of conditional LTM failures is greater than or equal to an eleventh threshold; and all conditional LTM executed for target candidate cell(s) fails, where the target candidate cell(s) are candidate cell(s) configured with conditional LTM among the LTM candidate cell(s).

In some embodiments, measurement of the first parameter is performed periodically, or measurement of the first parameter is performed after a first timer related to radio problem detection is started.

In some embodiments, a measurement period of the first parameter is determined based on one or more of the following: whether a first timer related to radio problem detection is started; a mobility speed of the terminal device; an area in which the terminal device is located; pre-configuration information of the terminal device; and second indication information sent by a network device; where the pre-configuration information is used to configure the measurement period of the first parameter, and the second indication information is used to indicate the measurement period of the first parameter.

In some embodiments, the LTM candidate cell(s) are at least part of LTM candidate cells of the terminal device, and the number of the at least part of LTM candidate cells is determined based on one or more of the following: whether a timing advance of the LTM candidate cell is known; whether the LTM candidate cell is configured with a contention-free random access resource; statistical information of the LTM candidate cell serving as a re-establishment cell; cell re-establishment policy information of an area in which the terminal device is located; quantity limit information of the LTM candidate cell(s); LTM candidate cell(s) indicated by a network device; and pre-configured LTM candidate cell(s) required to be measured.

FIG. 9 is a schematic structural diagram of a communication apparatus according to an embodiment of the present disclosure. The dashed line in FIG. 9 represents that the unit or module is optional. The apparatus 900 may be configured to implement the methods described in the method embodiments described above. The apparatus 900 may be a chip or terminal device.

The apparatus 900 may include one or more processors 910. The processor 910 may support the apparatus 900 to implement the methods described in the preceding method embodiments. The processor 910 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor, or the processor may also be any conventional processor, or the like.

The apparatus 900 may further include one or more memories 920. The memory 920 stores a program. The program may be executed by the processor 910, so that the processor 910 performs the methods described in the preceding method embodiments. The memory 920 may be independent of the processor 910 or integrated in the processor 910.

The apparatus 900 may further include a transceiver 930. The processor 910 may communicate with other devices or chips through the transceiver 930. For example, the processor 910 may transmit/receive data to/from other devices or chips through the transceiver 930.

An embodiment of the present disclosure further provides a computer-readable storage medium for storing a program. The computer-readable storage medium may be applied to the terminal or the network device provided in the embodiments of the present disclosure, and the program causes a computer to perform the methods performed by the terminal device or the network device in various embodiments of the present disclosure.

An embodiment of the present disclosure further provides a computer program product. The computer program product includes a program. The computer program product may be applied to the terminal or the network device in the embodiments of the present disclosure, and the program causes a computer to perform the methods performed by the terminal or the network device in various embodiments of the present disclosure.

An embodiment of the present disclosure further provides a computer program. The computer program may be applied to the terminal or the network device provided in the embodiments of the present disclosure, and the computer program causes a computer to perform the methods performed by the terminal device or the network device in various embodiments of the present disclosure.

It should be understood that the terms "system" and "network" in the present disclosure are often used interchangeably. In addition, the terms used in the present disclosure are only used to explain the specific embodiments of the present disclosure, and are not intended to limit the present disclosure. The terms "first," "second," "third," "fourth," and the like in the specification and claims of the present disclosure and the drawings are used for distinguishing between different objects, and are not used to describe a particular order. In addition, the terms "include" and "have" and any other variants thereof are intended to cover non-exclusive inclusions.

"Indicating/indicate" mentioned in the embodiments of the present disclosure may be a direct indication or an indirect indication, or may also represent an association. For example, A indicating B may mean that A directly indicates B, for example, B may be obtained from A; or it may mean that A indirectly indicates B, for example, A indicates C, and B may be obtained from C; or it may mean that there is an association between A and B.

In the embodiments of the present disclosure, "include" mentioned may mean direct inclusion or may mean indirect inclusion. Optionally, "include" mentioned in the embodiments of the present disclosure may be replaced with "indicate" or "used to determine". For example, "A includes B" may be replaced with "A indicates B", or "A is used to determine B".

It should be understood that in the embodiments of the present disclosure, "B corresponding to A" means that B is associated with A, and B can be determined based on A. However, it should also be understood that determining B based on A does not mean determining B only based on A, and B may also be determined based on A and/or other information.

In the embodiments of the present disclosure, the term "corresponding" may represent that there is a direct correspondence or indirect correspondence between two objects, or may represent an association therebetween, or may be the relationship between indicating and being indicated or configuring and being configured, or the like.

In the embodiments of the present disclosure, "predefined/predefinition" or "pre-configured/pre-configuration" may be implemented by pre-storing corresponding codes, tables, or other means available for indicating relevant information in a device (e.g., including a terminal device and a network device), and the present disclosure does not limit the specific implementation thereof. For example, the predefinition may refer to being defined in a protocol.

In the embodiments of the present disclosure, the "protocol" may refer to a standard protocol in the field of communications, for example, it may include an LTE protocol, an NR protocol, and related protocols applied to future communication systems, and the present disclosure is not limited thereto.

The term "and/or" in the embodiments of the present disclosure herein is merely to describe the associations between associated objects, indicating that there can be three kinds of relationships. For example, "A and/or B" may indicate three situations in which A exists alone, A and B exist simultaneously, and B exists alone. In addition, the character "j" herein generally indicates that the associated objects before and after this character are in an "or" relationship.

In various embodiments of the present disclosure, the size of the sequence numbers of various processes described above does not imply the order of execution, and the order of execution of various processes should be determined by the functions and internal logic thereof, and should not constitute any limitation on the implementation process of the embodiments of the present disclosure.

In several embodiments provided by the present disclosure, it should be understood that the disclosed systems, apparatuses, and methods may be implemented in other manners. For example, the apparatus embodiments described above are merely illustrative. For example, the division of the units is only a logical function division. During actual implementation, there may be other division methods. For example, a plurality of units or components may be combined or integrated into another system, or some features may be ignored or not implemented. Furthermore, the displayed or discussed coupling or direct coupling or communication connections may be indirect coupling or communication connections through some interfaces, apparatuses or units, and may be in electrical, mechanical or other forms.

The units described as separate components may or may not be physically separated, and the components displayed as units may or may not be physical units, that is, they may be located in one place, or may be distributed to a plurality of network units. A part or all of the units may be selected according to actual needs to achieve the objective of the solution of the present embodiment.

In addition, the functional units in various embodiments of the present disclosure may be integrated in one processing unit, or each unit may be individually physically present, or two or more units may be integrated into one unit.

The above embodiments may be implemented in whole or in part by software, hardware, firmware, or any combination thereof. When implemented by using software, the above embodiments may be implemented as a whole or in part in the form of a computer program product. The computer program product includes one or more computer instructions. When the computer program instructions are loaded and executed on a computer, the processes or functions according to the embodiments of the present disclosure are generated as a whole or in part. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website site, computer, server or data center to another website site, computer, server or data center by means of wired (e.g., coaxial cable, optical fiber, digital subscriber line (DSL)) or wireless (e.g., infrared, wireless, microwave). The computer-readable storage medium may be any available medium that a computer can read, or a data storage device such as a server or data center integrating one or more available media. The available media may be magnetic media (e.g., floppy disks, hard disks, magnetic tapes), optical media (e.g., digital video discs (DVDs)), semiconductor media (e.g., solid state disks (SSDs)) or the like.

The description above is merely specific implementation of the present disclosure, but the scope of protection of the present disclosure is not limited thereto. Any person skilled in the art can easily conceive of changes or substitutions within the technical scope disclosed in the present disclosure, and all of the changes or substitutions should be covered by the scope of protection of the present disclosure. Therefore, the scope of protection of the present disclosure should be defined by the scope of protection of the claims.

## Claims

1. A radio link recovery method, comprising:
acquiring, by a terminal device, a first parameter of a serving cell and/or layer 1/layer 2 (L1/L2)-triggered mobility (LTM) candidate cell(s), wherein the first parameter is used to represent channel quality of the serving cell and/or the LTM candidate cell(s); and
determining, by the terminal device, based on the first parameter of the serving cell and/or the LTM candidate cell(s), whether to execute a radio link recovery operation.

2. The method according to claim 1, wherein the first parameter comprises a signal-to-interference-plus-noise ratio (SINR) and/or reference signal receiving power (RSRP).

3. The method according to claim 1 or 2, wherein the radio link recovery operation is executed when the first parameter of the serving cell and/or the LTM candidate cell(s) meets a first condition.

4. The method according to claim 3, wherein the first condition is associated with one or more of the following:
a magnitude relationship between the first parameter of the serving cell and a threshold;
a magnitude relationship between the first parameter of the LTM candidate cell and a threshold; and
a magnitude relationship between the first parameter of the serving cell and the first parameter of the LTM candidate cell.

5. The method according to claim 4, wherein the first condition comprises one or more of the following:
the first parameter of the LTM candidate cell is greater than or equal to a sum of the first parameter of the serving cell and a first offset;
the first parameter of the LTM candidate cell is greater than or equal to a first threshold;
the first parameter of the serving cell is less than or equal to a second threshold; and
the first parameter of the serving cell is less than or equal to a third threshold, and the first parameter of the LTM candidate cell is greater than or equal to a fourth threshold.

6. The method according to any one of claims 3 to 5, wherein the first parameter of the serving cell and/or the LTM candidate cell(s) meets the first condition, which comprises at least one of the following:
within a first time period, first parameters of the serving cell and/or the LTM candidate cell(s) corresponding to different determination time points all meet the first condition;
within the first time period, a number of times that the first parameter of the serving cell and/or the LTM candidate cell(s) meets the first condition is greater than or equal to a fifth threshold;
within the first time period, a ratio of the first parameter of the serving cell and/or the LTM candidate cell(s) meeting the first condition is greater than or equal to a sixth threshold;
a number of consecutive times that the first parameter of the serving cell and/or the LTM candidate cell(s) meets the first condition is greater than or equal to a seventh threshold;
within a plurality of consecutive second time periods, first parameters of the serving cell and/or the LTM candidate cell(s) all meet the first condition;
in each of the plurality of consecutive second time periods, a number of times that the first parameter of the serving cell and/or the LTM candidate cell(s) meets the first condition is greater than or equal to an eighth threshold;
in each of the plurality of consecutive second time periods, a ratio of the first parameter of the serving cell and/or the LTM candidate cell(s) meeting the first condition is greater than or equal to a ninth threshold; and
before a first timer expires, a number of times that the first parameter of the serving cell and/or the LTM candidate cell(s) meets the first condition is greater than or equal to a tenth threshold.

7. The method according to claim 6, wherein determination of whether the first parameter of the serving cell and/or the LTM candidate cell(s) meets the first condition by the terminal device is periodic determination or aperiodic determination.

8. The method according to claim 7, wherein if the determination of whether the first parameter of the serving cell and/or the LTM candidate cell(s) meets the first condition by the terminal device is periodic determination, determination periods corresponding to different first parameters are the same or different.

9. The method according to any one of claims 6 to 8, further comprising:
determining, by a physical layer of the terminal device, whether the first parameter of the serving cell and/or the LTM candidate cell(s) meets the first condition, and transmitting a determination result to a media access control (MAC) layer of the terminal device; or
transmitting, by a physical layer of the terminal device, the first parameter of the serving cell and/or the LTM candidate cell(s) to a medium access control (MAC) layer of the terminal device, and determining, by the MAC layer of the terminal device, whether the first parameter of the serving cell and/or the LTM candidate cell(s) meets the first condition; or
determining, by a physical layer of the terminal device, whether the first parameter of the serving cell and/or the LTM candidate cell(s) meets the first condition, and if so, transmitting a determination result to a medium access control (MAC) layer of the terminal device.

10. The method according to any one of claims 1 to 9, wherein the radio link recovery operation comprises conditional LTM and/or connection re-establishment.

11. The method according to claim 10, wherein the radio link recovery operation is determined based on one or more of the following pieces of information:
first indication information sent by a network device; and
whether the LTM candidate cell is configured with conditional LTM.

12. The method according to claim 11, wherein the first indication information is carried in a radio resource control (RRC) signaling, a media access control control element (MAC CE), or downlink control information (DCI).

13. The method according to any one of claims 10 to 12, further comprising:
executing, by the terminal device, connection re-establishment, if a second condition is met during a process in which the terminal device executes conditional LTM.

14. The method according to claim 13, wherein the second condition is associated with one or more of the following:
a second timer related to radio problem detection; and
information related to conditional LTM failure.

15. The method according to claim 14, wherein the second condition comprises one or more of the following:
the second timer expires;
a number of conditional LTM failures is greater than or equal to an eleventh threshold; and
all conditional LTM executed for target candidate cell(s) fails, wherein the target candidate cell(s) are candidate cell(s) configured with conditional LTM among the LTM candidate cell(s).

16. The method according to any one of claims 1 to 15, wherein measurement of the first parameter is performed periodically, or measurement of the first parameter is performed after a second timer related to radio problem detection is started.

17. The method according to any one of claims 1 to 16, wherein a measurement period of the first parameter is determined based on one or more of the following:
whether a second timer related to radio problem detection is started;
a mobility speed of the terminal device;
an area in which the terminal device is located;
pre-configuration information of the terminal device; and
second indication information sent by a network device;
wherein the pre-configuration information is used to configure the measurement period of the first parameter, and the second indication information is used to indicate the measurement period of the first parameter.

18. The method according to any one of claims 1 to 17, wherein the LTM candidate cell(s) are at least part of LTM candidate cells of the terminal device, and the at least part of LTM candidate cells is determined based on one or more of the following:
whether a timing advance of the LTM candidate cell is known;
whether the LTM candidate cell is configured with a contention-free random access resource;
statistical information of the LTM candidate cell serving as a re-establishment cell;
cell re-establishment policy information of an area in which the terminal device is located;
quantity limit information of the LTM candidate cell(s);
LTM candidate cell(s) indicated by a network device; and
pre-configured LTM candidate cell(s) required to be measured.

19. A terminal device, comprising:
an acquisition unit, configured to acquire a first parameter of a serving cell and/or layer 1/layer 2 (L1/L2)-triggered mobility (LTM) candidate cell(s), wherein the first parameter is used to represent channel quality of the serving cell and/or the LTM candidate cell(s); and
a determination unit, configured to determine, based on the first parameter of the serving cell and/or the LTM candidate cell(s), whether to execute a radio link recovery operation.

20. The device according to claim 19, wherein the first parameter comprises a signal-to-interference-plus-noise ratio (SINR) and/or reference signal receiving power (RSRP).

21. The device according to claim 19 or 20, wherein the radio link recovery operation is executed when the first parameter of the serving cell and/or the LTM candidate cell(s) meets a first condition.

22. The device according to claim 21, wherein the first condition is associated with one or more of the following:
a magnitude relationship between the first parameter of the serving cell and a threshold;
a magnitude relationship between the first parameter of the LTM candidate cell and a threshold; and
a magnitude relationship between the first parameter of the serving cell and the first parameter of the LTM candidate cell.

23. The device according to claim 22, wherein the first condition comprises one or more of the following:
the first parameter of the LTM candidate cell is greater than or equal to a sum of the first parameter of the serving cell and a first offset;
the first parameter of the LTM candidate cell is greater than or equal to a first threshold;
the first parameter of the serving cell is less than or equal to a second threshold; and
the first parameter of the serving cell is less than or equal to a third threshold, and the first parameter of the LTM candidate cell is greater than or equal to a fourth threshold.

24. The method according to any one of claims 21 to 23, wherein the first parameter of the serving cell and/or the LTM candidate cell(s) meets the first condition, which comprises at least one of the following:
within a first time period, first parameters of the serving cell and/or the LTM candidate cell(s) corresponding to different determination time points all meet the first condition;
within the first time period, a number of times that the first parameter of the serving cell and/or the LTM candidate cell(s) meets the first condition is greater than or equal to a fifth threshold;
within the first time period, a ratio of the first parameter of the serving cell and/or the LTM candidate cell(s) meeting the first condition is greater than or equal to a sixth threshold;
a number of consecutive times that the first parameter of the serving cell and/or the LTM candidate cell(s) meets the first condition is greater than or equal to a seventh threshold;
within a plurality of consecutive second time periods, first parameters of the serving cell and/or the LTM candidate cell(s) all meet the first condition;
in each of the plurality of consecutive second time periods, a number of times that the first parameter of the serving cell and/or the LTM candidate cell(s) meets the first condition is greater than or equal to an eighth threshold;
in each of the plurality of consecutive second time periods, a ratio of the first parameter of the serving cell and/or the LTM candidate cell(s) meeting the first condition is greater than or equal to a ninth threshold; and
before a first timer expires, a number of times that the first parameter of the serving cell and/or the LTM candidate cell(s) meets the first condition is greater than or equal to a tenth threshold.

25. The device according to claim 24, wherein determination of whether the first parameter of the serving cell and/or the LTM candidate cell(s) meets the first condition by the terminal device is periodic determination or aperiodic determination.

26. The device according to claim 25, wherein if the determination of whether the first parameter of the serving cell and/or the LTM candidate cell(s) meets the first condition by the terminal device is periodic determination, determination periods corresponding to different first parameters are the same or different.

27. The device according to any one of claims 24 to 26, further comprising an execution unit, configured to execute one of the following:
determining, by a physical layer of the terminal device, whether the first parameter of the serving cell and/or the LTM candidate cell(s) meets the first condition, and transmitting a determination result to a media access control (MAC) layer of the terminal device;
transmitting, by a physical layer of the terminal device, the first parameter of the serving cell and/or the LTM candidate cell(s) to a media access control (MAC) layer of the terminal device, and determining, by the MAC layer of the terminal device, whether the first parameter of the serving cell and/or the LTM candidate cell(s) meets the first condition; or
determining, by a physical layer of the terminal device, whether the first parameter of the serving cell and/or the LTM candidate cell(s) meets the first condition, and if so, transmitting a determination result to a media access control (MAC) layer of the terminal device.

28. The device according to any one of claims 19 to 27, wherein the radio link recovery operation comprises conditional LTM and/or connection re-establishment.

29. The device according to claim 28, wherein the radio link recovery operation is conditional LTM or connection re-establishment, and is determined based on one or more of the following pieces of information:
first indication information sent by a network device; and
whether the LTM candidate cell is configured with conditional LTM.

30. The device according to claim 29, wherein the first indication information is carried in a radio resource control (RRC) signaling, a media access control control element (MAC CE), or downlink control information (DCI).

31. The device according to any one of claims 28 to 30, further comprising:
an execution unit, configured to execute connection re-establishment, if a second condition is met during a process in which the terminal device executes conditional LTM.

32. The device according to claim 31, wherein the second condition is associated with one or more of the following:
a second timer related to radio problem detection; and
information related to conditional LTM failure.

33. The device according to claim 32, wherein the second condition comprises one or more of the following:
the second timer expires;
a number of conditional LTM failures is greater than or equal to an eleventh threshold; and
all conditional LTM executed for target candidate cell(s) fails, wherein the target candidate cell(s) are candidate cell(s) configured with conditional LTM among the LTM candidate cell(s).

34. The device according to any one of claims 19 to 33, wherein measurement of the first parameter is performed periodically, or measurement of the first parameter is performed after a second timer related to radio problem detection is started.

35. The device according to any one of claims 19 to 34, wherein a measurement period of the first parameter is determined based on one or more of the following:
whether a second timer related to radio problem detection is started;
a mobility speed of the terminal device;
an area in which the terminal device is located;
pre-configuration information of the terminal device; and
second indication information sent by a network device;
wherein the pre-configuration information is used to configure the measurement period of the first parameter, and the second indication information is used to indicate the measurement period of the first parameter.

36. The device according to any one of claims 19 to 35, wherein the LTM candidate cell(s) are at least part of LTM candidate cells of the terminal device, and the at least part of LTM candidate cells is determined based on one or more of the following:
whether a timing advance of the LTM candidate cell is known;
whether the LTM candidate cell is configured with a contention-free random access resource;
statistical information of the LTM candidate cell serving as a re-establishment cell;
cell re-establishment policy information of an area in which the terminal device is located;
quantity limit information of the LTM candidate cell(s);
LTM candidate cell(s) indicated by a network device; and
pre-configured LTM candidate cell(s) required to be measured.

37. A terminal device, comprising a memory and a processor, wherein the memory is configured to store a program, and the processor is configured to invoke the program in the memory, to enable the terminal device to execute the method according to any one of claims 1-18.

38. An apparatus, comprising a processor configured to invoke a program from a memory, to enable the apparatus to execute the method according to any one of claims 1-18.

39. A chip, comprising a processor configured to invoke a program from a memory, to enable a device installed with the chip to execute the method according to any one of claims 1-18.

40. A computer-readable storage medium, having stored thereon a program for causing a computer to execute the method according to any one of claims 1-18.

41. A computer program, for causing a computer to execute the method according to any one of claims 1-18.
